# EUROPÄISCHE PATENTSCHRIFT

(11) **EP 3 511 564 B1**
(45) Veröffentlichungstag und Bekanntmachung des Hinweises auf die Patenterteilung: **15.07.2020**
(21) Anmeldenummer: 19150713.6
(22) Anmeldetag: 08.01.2019
(51) Int. Cl.: F03D 7/04

(54) **VERFAHREN UND SYSTEM ZUM STEUERN EINER WINDENERGIEANLAGE**
METHOD AND SYSTEM FOR CONTROLLING A WIND ENERGY PLANT
PROCÉDÉ ET SYSTÈME DE COMMANDE D'UNE ÉOLIENNE

(30) Priorität: 11.01.2018 DE 102018000156
(43) Veröffentlichungstag der Anmeldung: 17.07.2019
(73) Patentinhaber: Senvion GmbH, 22297 Hamburg (DE)
(72) Erfinder: Geisler, Jens, 24768 Rendsburg (DE); Schröter, Thomas, 21073 Hamburg (DE)
(74) Vertreter: Glawe, Delfs, Moll

(56) Entgegenhaltungen:
- DE-A1- 19 908 250
- DE-A1-102016 103 101

## Beschreibung

Die Erfindung betrifft ein Verfahren und ein System zum Steuern einer Windenergieanlage.

Mit der Steuerung einer Windenergieanlage können Stellgrößen der Windenergieanlage beeinflusst werden. Zu den Stellgrößen einer Windenergieanlage gehören beispielsweise der Anstellwinkel (Pitchwinkel) der Rotorblätter, durch den die Leistungsaufnahme aus dem Wind bestimmt wird, sowie das elektrische Drehmoment, das dem Rotor durch das elektrische System der Windenergieanlage entgegengesetzt wird. Üblicherweise unterliegen die Stellgrößen der Windenergieanlage der Kontrolle durch einen geschlossenen Regelkreis. Dabei liegt am Eingang des Reglers eine Differenz zwischen einem Istwert und einem Sollwert der zu regelnden Größe (Regelgröße) an. Der Regler leitet daraus einen Stellwert ab, mit dem eine Stellgröße eingestellt wird. Indem der Istwert der Regelgröße gemessen wird und an den Eingang des Reglers zurückgeführt wird, handelt es sich um einen geschlossenen Regelkreis.

Windenergieanlagen können externe Vorgabe für den Betrieb erhalten, beispielsweise indem der Netzbetreiber fordert, dass die Windenergieanlage eine bestimmte Menge Wirkleistung einspeist. Wenn ein externer Vorgabewert bei der Windenergieanlage eingeht, soll die Windenergieanlage entsprechend dem externen Vorgabewert eingestellt werden. Eine einzelne Änderung des externen Vorgabewerts stellt im Allgemeinen keine Beeinträchtigung für die Betriebssicherheit der Windenergieanlage dar, weswegen eine unmittelbare Umsetzung des externen Vorgabewerts zugelassen werden kann.

Dokument DE 10 2016 103101 A1 stellt ein Verfahren zum Regeln eines Windparks vor, wobei wenigstens eine Stellgröße in Abhängigkeit von wenigstens einem Regelfehler erzeugt wird und wobei ein Parkzustand an einem Zustandseingang eines Regelungsmoduls aufgenommen wird.

Der Erfindung liegt die Aufgabe zugrunde, ein Verfahren und ein System zum Steuern einer Windenergieanlage vorzustellen, mit denen die Betriebssicherheit der Windenergieanlage erhöht wird. Ausgehend vom genannten Stand der Technik wird die Aufgabe gelöst mit den Merkmalen der unabhängigen Ansprüche. Vorteilhafte Ausführungsformen sind in den Unteransprüchen angegeben.

Bei dem erfindungsgemäßen Verfahren wird in einem geschlossenen Regelkreis ein Stellwert für eine Stellgröße der Windenergieanlage ermittelt. Bei dem Verfahren wird die Stellgröße gemäß einem mit einer Gewichtung versehenen externen Vorgabewert eingestellt. Bei einer Folge von externen Vorgabewerten (Vorgabewertfolge) mit wenigstens einer Richtungsänderung wird die Gewichtung des externen Vorgabewerts vermindert.

Die Erfindung hat erkannt, dass die Betriebssicherheit der Windenergieanlage durch eine ungünstige Abfolge von externen Vorgabewerten beeinträchtigt werden kann. Werden beispielsweise in einem schnellen Wechsel Erhöhungen und Verminderungen der Leistungsabgabe gefordert, so können die damit verbundenen Lastwechsel die Windenergieanlage zum Schwingen bringen.

Mit der Erfindung wird vorgeschlagen, die Gewichtung des externen Vorgabewerts beim Einstellen der Stellgröße in Abhängigkeit von Richtungsänderungen des externen Vorgabewerts zu vermindern. Die Erfindung hat erkannt, dass es gerade Richtungsänderungen in den externen Vorgabewerten sind, die die Stabilität des Betriebs der Windenergieanlage beeinträchtigen können.

Geht ein neuer externer Vorgabewert bei der Steuerung ein, so kann der neue externe Vorgabewert verglichen mit dem vorangegangenen externen Vorgabewert eine Erhöhung oder eine Verminderung darstellen. Als Richtungsänderung wird es bezeichnet, wenn der externe Vorgabewert zwischen einer Erhöhung und einer Verminderung wechselt. Um eine Richtungsänderung erkennen zu können, wird eine Folge von wenigstens drei externen Vorgabewerten betrachtet. Sind der erste externe Vorgabewert und der dritte externe Vorgabewert niedriger als der zweite externe Vorgabewert, so stellt der dritte externe Vorgabewert eine Richtungsänderung dar, mit der die externe Vorgabe von einer Erhöhung zu einer Verminderung wechselt. Sind umgekehrt der erste externe Vorgabewert und der dritte externe Vorgabewert höher als der zweite externe Vorgabewert, so stellt der dritte externe Vorgabewert eine Richtungsänderung dar, mit der die externe Vorgabe von einer Verminderung zu einer Erhöhung wechselt. Bei einer Vorgabewertfolge mit mehr als drei Vorgabewerten kann zwischen den betreffenden Erhöhungen bzw. Verminderungen eine Mehrzahl von identischen Vorgabewerten liegen.

Die erfindungsgemäße Vorgabewertfolge kann aus kontinuierlich empfangenen externen Vorgabewerten bestehen oder aus externen Vorgabewerten, die in zeitlichen Abständen empfangen werden. In beiden Fällen kann eine Richtungsänderung in der Vorgabewertfolge ohne weiteres festgestellt werden.

Wird die Stellgröße gemäß dem externen Vorgabewert eingestellt, so wird eine Einstellung an der Windenergieanlage vorgenommen, um die geregelte Größe an den externen Vorgabewert heranzuführen. Mit der Gewichtung wird festgelegt, wie groß der Einfluss des externen Vorgabewerts auf die Stellgröße verglichen mit anderen Einflüssen ist, insbesondere verglichen mit dem Einfluss von Störgrößen.

Bei dem erfindungsgemäßen Verfahren gibt es mehrere Möglichkeiten, wie der externe Vorgabewert dem geschlossenen Regelkreis zugegführt werden kann. Beispielsweise kann der externe Vorgabewert als geänderter Sollwert in den geschlossenen Regelkreis eingespeist werden. Der Regler kann dann einen Stellwert für die Windenergieanlage ermitteln, so dass die geregelte Größe sich an den externen Vorgabewert annähert. Da der Regelkreis Zeitkonstanten unterliegt, vergeht eine gewisse Zeit, bis die Annäherung an den externen Vorgabewert erfolgt ist. Von Vorteil bei dieser Ausführungsform ist die Verwendung eines Regelkreises mit kurzer Zeitkonstante.

Insbesondere wenn eine schnelle Umsetzung des externen Vorgabewerts gefordert ist, kann es sich anbieten, dass der externe Vorgabewert am Ausgang des Reglers dem von dem Regler ermittelten Stellwert überlagert wird (Vorsteuerung). Mit dem externen Vorgabewert wird dann unter Umgehung des Reglers Einfluss auf die Stellgröße genommen. In einer Ausführungsform wird der externe Vorgabewert sowohl als Sollwert für den Regler als auch als Vorsteuerwert verwendet, der dem Stellwert des Reglers überlagert wird.

Der externe Vorgabewert kann so gestaltet sein, dass eine direkte Verwendung als Sollwert bzw. als Vorsteuerwert möglich ist. Dies ist insbesondere dann möglich, wenn der externe Vorgabewert dieselbe Größe betrifft, die in dem geschlossenen Regelkreis eingestellt wird. In vielen Fällen ist diese Voraussetzung nicht gegeben. Beispielsweise ist denkbar, dass mit dem externen Vorgabewert eine bestimmte Menge an Wirkleistung gefordert wird, während in dem Regelkreis der Pitchwinkel der Rotorblätter eingestellt wird. Es kann also eine Umrechnung erforderlich sein, um aus dem externen Vorgabewert eine Vorgabe abzuleiten, die in dem Regelkreis als Sollwert oder als Vorsteuerwert verarbeitet werden kann. Auch eine solch abgeleitete Vorgabe ist ein externer Vorgabewert im Sinne der Erfindung.

Das Verfahren kann so durchgeführt werden, dass bereits eine einzelne Richtungsänderung in der Vorgabewertfolge Anlass ist, die Gewichtung des externen Vorgabewerts zu vermindern. In anderen Ausführungsformen wird die Gewichtung erst nach dem Auftreten von mehreren Richtungsänderungen vermindert, beispielsweise nach wenigstens zwei Richtungsänderungen, vorzugsweise nach wenigstens drei Richtungsänderungen, weiter vorzugsweise nach wenigstens fünf Richtungsänderungen.

Die einzelne Richtungsänderung oder die Mehrzahl von Richtungsänderungen wird erfindungsgemäß in Bezug zu einem zeitlichen Intervall gesetzt, sodass die Gewichtung nur dann vermindert wird, wenn die eine Richtungsänderung oder die Mehrzahl von Richtungsänderungen innerhalb eines vorgegebenen zeitlichen Intervalls auftritt. Dabei gilt der Abschnitt zwischen dem Beginn des zeitlichen Intervalls und dem ersten innerhalb des zeitlichen Intervalls eingegangenen Vorgabewert als Phase, in der keine Richtungsänderung stattgefunden hat. Es spielt mit anderen Worten keine Rolle, ob der letzte Vorgabewert, der vor Beginn des zeitlichen Intervalls eingegangen ist, eine Erhöhung oder eine Verminderung vorgegeben hat.

Die Länge des zeitlichen Intervalls kann beispielsweise zwischen 10 s und 60 s liegen. Das zeitliche Intervall kann ein gleitendes Intervall sein. Das gleitende Intervall kann sich vom aktuellen Zeitpunkt in die Vergangenheit erstrecken.

Zusätzlich oder alternativ dazu kann eine Differenz zwischen zwei externen Vorgabewerten betrachtet werden, sodass die Gewichtung nur dann vermindert wird, wenn die Differenz zwischen einem ersten externen Vorgabewert und einem zweiten externen Vorgabewert größer ist als ein vorgegebener Schwellwert. Werden die externen Vorgabewerte zeitlich diskret empfangen, so kann insbesondere die Differenz zwischen zwei aufeinanderfolgenden externen Vorgabewerten ausgewertet werden. Bei kontinuierlich empfangenen externen Vorgabewerten, kann die Differenz bezogen auf einen vorgegebenen zeitlichen Abstand ausgewertet werden.

Die Erfindung hat erkannt, dass sowohl die Anzahl der Richtungsänderungen als auch die Stärke der Richtungsänderungen relevant für den Betrieb der Windenergieanlage ist. In einer Ausführungsform des Verfahrens wird die Vorgabewertfolge anhand zweier Kriterien bewertet. Gemäß einem ersten Kriterium wird geprüft, ob eine erste Anzahl von Richtungsänderungen innerhalb einer ersten vorgegebenen Zeitspanne auftritt. Gemäß einem zweiten Kriterium wird geprüft, ob innerhalb einer zweiten vorgegebenen Zeitspanne eine zweite Anzahl von Richtungsänderungen auftritt, bei der die Differenz der Vorgabewerte größer ist als ein vorgegebener Schwellwert. Die zweite Anzahl von Richtungsänderungen kann kleiner sein als die erste Anzahl von Richtungsänderungen, insbesondere kann die zweite Anzahl von Richtungsänderungen eins sein. Die zweite vorgegebene Zeitspanne kann verglichen mit der ersten vorgegebenen Zeitspanne kürzer, länger oder gleich lang sein. Die zweite vorgegebene Zeitspanne kann zum gleichen Zeitpunkt beginnen wie die erste vorgegebene Zeitspanne oder zu einem anderen Zeitpunkt. Das Verfahren kann so durchgeführt werden, dass die Gewichtung reduziert wird, wenn eines der beiden Kriterien erfüllt ist. Mit anderen Worten wird die Gewichtung dann vermindert, wenn innerhalb der betreffenden Zeitspannen entweder eine größere Zahl von "geringfügigen" Richtungsänderungen auftritt oder eine kleinere Zahl von "gravierenden" Richtungsänderungen.

Wenn die Gewichtung des externen Vorgabewerts infolge einer Richtungsänderung in der Vorgabewertfolge reduziert wurde, kann eine Anschlusszeitspanne in Gang gesetzt werden. Das Verfahren kann so durchgeführt werden, dass die durch das Überschreiten der Schwelle eingeleitete Änderung der Gewichtung erst nach Ablauf der Anschlusszeitspanne zurückgenommen wird. Zusätzlich oder alternativ dazu kann das Verfahren so durchgeführt werden, dass die Gewichtung des externen Vorgabewerts stärker reduziert wird, falls innerhalb der Anschlusszeitspanne ein zweites Mal eine Bedingung für eine Verminderung der Gewichtung des externen Vorgabewerts eintritt. Die Anschlusszeitspanne kann in diesem Fall von neuem gestartet werden.

Im Rahmen der Erfindung ist eine Verminderung der Gewichtung des externen Vorgabewerts eine Verminderung verglichen mit einer Ausgangsgewichtung. Ausgangsgewichtung ist diejenige Gewichtung, mit der der externe Vorgabewert beim Einstellen der Stellgröße berücksichtigt wird, bevor eine Bedingung für eine Verminderung der Gewichtung eintritt. Tritt ein erstes Mal eine Bedingung für eine Verminderung der Gewichtung ein, so kann die Gewichtung beispielsweise auf einen Wert zwischen 30 % und 70 % verglichen mit der Ausgangsgewichtung gesetzt werden. Tritt innerhalb der Anschlusszeitspanne ein zweites Mal eine Bedingung für eine Verminderung der Gewichtung auf, so kann die Gewichtung beispielsweise auf einen Wert zwischen 0 % und 30 % verglichen mit der Ausgangsgewichtung gesetzt werden. Bei einer Gewichtung von 0 % wird der von dem Regler ermittelte Stellwert gar nicht mehr von dem externen Vorgabewert verändert. Das Einstellen der Gewichtung kann beispielsweise dadurch erfolgen, dass ein Verstärkungsfaktor angepasst wird, mit dem der externe Vorgabewert dem geschlossenen Regelkreis zugeführt wird. Möglich sind auch andere Vorschriften, um die Gewichtung des externen Vorgabewerts einzustellen, sowie andere Vorschriften, mit denen die externen Vorgabewerte in geeigneter Weise geglättet, gefiltert oder in sonstiger Weise angepasst werden.

Der externe Vorgabewert kann sich beispielsweise auf die Wirkleistung und/oder auf die Blindleistung beziehen, die von der Windenergieanlage in ein Anschlussnetz eingespeist werden soll. Bei einer derartigen Vorgabe dauert es eine gewisse Zeit, bis eventuelle Auswirkungen von ungünstigen Abfolgen von externen Sollwerten tatsächlich gemessen werden können. Durch das erfindungsgemäße Verfahren können die schädlichen Auswirkungen vermieden werden, bevor sie sich messbar äußern.

Das erfindungsgemäße Verfahren kann allgemein Anwendung finden im Verhältnis zwischen einer übergeordneten Steuerungsebene und einer untergeordneten Steuerungsebene. Auf der übergeordneten Steuerungsebene wird der externe Vorgabewert generiert und an die untere Steuerungsebene übermittelt. Die untere Steuerungsebene empfängt den externen Vorgabewert und setzt ihn im Zusammenspiel mit dem auf der unteren Steuerungsebene wirkenden geschlossenen Regelkreis um.

Die untergeordnete Steuerungsebene kann beispielsweise der Steuerung einer einzelnen Windenergieanlage entsprechen. Die übergeordnete Steuerungsebene ist in einer Ausführungsform das Anschlussnetz, in das die von der Windenergieanlage erzeugte elektrische Energie eingespeist wird. Die übergeordnete Steuerungsebene kann auch eine Windparksteuerung (Parkmaster) sein, von der aus externe Vorgabewerte an die Steuerung der Windenergieanlage übermittelt werden.

Möglich ist auch, dass innerhalb einer einzelnen Windenergieanlage eine Mehrzahl von Steuerungsebenen vorgesehen ist. Dies kann etwa bei einer modularen Steuerungsarchitektur der Fall sein, bei dem ein erstes Steuermodul einen externen Vorgabewert für ein zweites Steuermodul erzeugt. In einer Ausführungsform ist die obere Steuerungsebene eine modellprädiktive Regelung (MPC, Model Predictive Control, Receding horizon control), die externe Vorgabewerte für die untere Steuerungsebene vorgibt.

Die Erfindung betrifft außerdem ein Steuerungssystem für eine Windenergieanlage, umfassend einen Regler und ein Gewichtungsmodul. Der Regler ermittelt in einem geschlossenen Regelkreis einen Stellwert für eine Stellgröße der Windenergieanlage. Das Gewichtungsmodul ist dazu ausgelegt, dem geschlossenen Regelkreis einen externen Vorgabewert mit einer Gewichtung zuzuführen, so dass die Stellgröße gemäß dem mit der Gewichtung versehenen externen Vorgabewert eingestellt wird. Das Gewichtungsmodul ist außerdem dazu ausgelegt, die Gewichtung des externen Vorgabewerts in Abhängigkeit von einer Richtungsänderung in der Vorgabewertfolge zu vermindern. Die Erfindung betrifft außerdem eine mit einem solchen Steuerungssystem ausgestattete Windenergieanlage.

Das Steuerungssystem kann mit weiteren Merkmalen fortgebildet werden, die im Zusammenhang des erfindungsgemäßen Verfahrens beschrieben sind. Das Verfahren kann mit weiteren Merkmalen fortgebildet werden, die im Zusammenhang des erfindungsgemäßen Steuerungssystems beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine schematische Darstellung einer erfindungsgemäßen Windenergieanlage;
- Fig. 2:: ein erfindungsgemäßes Steuerungssystem;
- Fig. 3 bis 6:: verschiedene Beispiele von Vorgabewertfolgen.

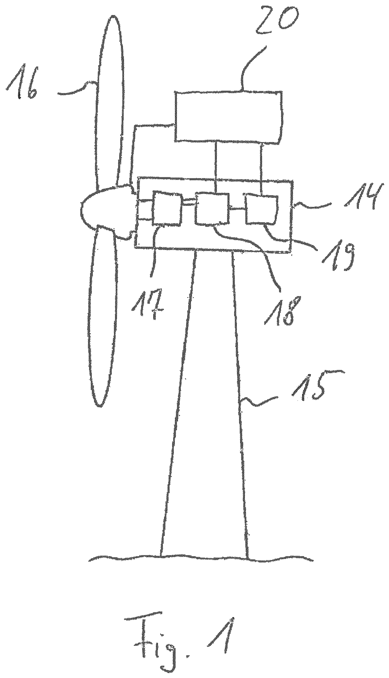

Bei einer in Fig. 1 gezeigten Windenergieanlage ist eine Gondel 14 drehbar auf einem Turm 15 gelagert. Die Gondel trägt einen Rotor 16, der durch den Wind in Drehung versetzt wird. Der Rotor ist über ein Getriebe 17 an einen Generator 18 angeschlossen, der bei einer Drehung des Rotors 16 elektrische Energie erzeugt. Über einen Umrichter 19 wird die elektrische Energie in ein nicht dargestelltes Anschlussnetz eingespeist.

Eine Steuerung 20 macht Vorgaben für den Betrieb der Windenergieanlage. Die Vorgaben betreffen Stellgrößen der Windenergieanlage, zu denen insbesondere der Pitchwinkel der Rotorblätter sowie den Einstellungen des Generators 18 und des Umrichters 19 gehören. Der Generator 18 und der Umrichter 19 bilden gemeinsam ein elektrisches System, das dem Rotor ein Drehmoment entgegensetzt.

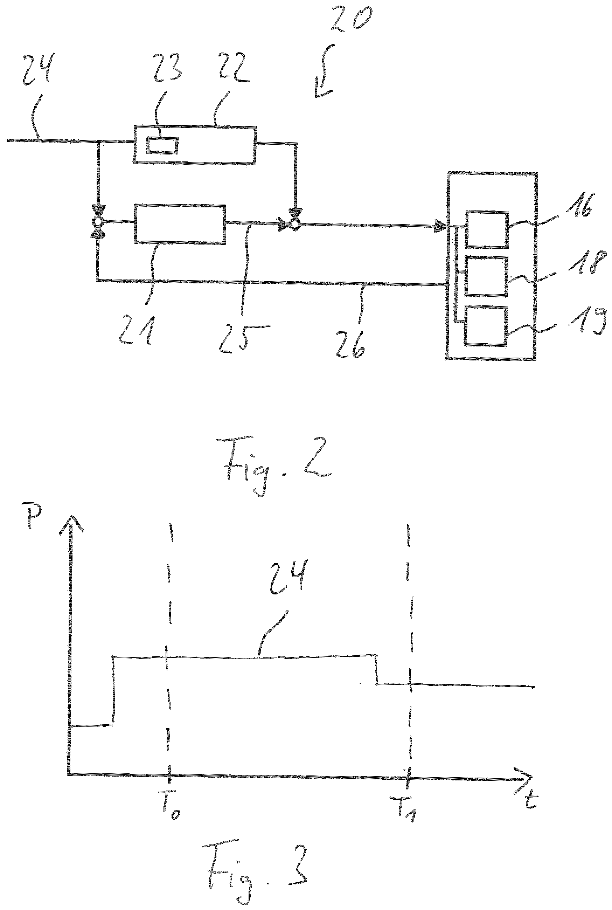

Die Steuerung 20 umfasst gemäß Fig. 2 einen Regler 21, dem Messwerte 26 über den tatsächlichen Systemzustand der Windenergieanlage zugeführt werden. Ein externer Vorgabewert 24 liegt am Eingang des Reglers als Sollwert an. Der Regler 21 wertet die Differenz zwischen den Istwerten und den Sollwerten aus und ermittelt daraus Stellwerte 25 für die Stellgrößen der Windenergieanlage. Die Stellgrößen sind in Fig. 2 der Pitchwinkel des Rotors 16 sowie die Einstellungen des Generators 18 und des Umrichters 19.

Solange der externe Vorgabewert 24 sich nicht ändert, werden die von dem Regler 21 ermittelten Stellwerte 25 direkt an die Stellglieder geleitet, so das diese entsprechend eingestellt werden können.

Ändert sich der externe Vorgabewert 24, so liegt zum einen ein geänderter Sollwert am Eingang des Reglers 21 an. Zum anderen wird der neue externe Vorgabewert 24 über ein Gewichtungsmodul 22 an den Ausgang des Reglers 21 geleitet und dort dem von dem Regler 21 ermittelten Stellwert 25 überlagert. Betrifft der externe Vorgabewert 24 beispielsweise eine geänderte Vorgabe für die Wirkleistung der Windenergieanlage, so leiten sich daraus unmittelbar bestimmte Werte für den Pitchwinkel ab, auf den der Rotor 16 eingestellt werden kann. In dem Gewichtungsmodul 22 wird eine Umrechnung vorgenommen, um den externen Vorgabewert 24 in eine Größe umzurechnen, die in dem Regelkreis als Vorsteuerwert verarbeitet werden kann.

Die Gewichtung, mit der der externe Vorgabewert 24 dem Stellwert 25 des Reglers 21 überlagert wird, wird in dem Gewichtungsmodul 22 festgelegt. Das Gewichtungsmodul 22 umfasst eine Auswerteeinheit 23, die die Abfolge der externen Vorgabewerte 24 in einem gleitenden Zeitraum T₀ bis T₁ analysiert, wobei T₁ dem aktuellen Zeitpunkt entspricht. Bleibt der externe Vorgabewert 24 in dem Zeitraum T₀ bis T₁ konstant oder kommt es nur zu wenigen geringfügigen Änderungen, so wird der externe Vorgabewert 24 dem Stellwert 25 des Reglers 21 mit hoher Gewichtung überlagert. Kommt es in dem Zeitraum T₀ bis T₁ zu mehreren kleinen Richtungsänderungen oder einer großen Richtungsänderung bei dem externen Vorgabewert 24, so wird die Gewichtung des externen Vorgabewerts 24 relativ zu dem Stellwert 25 des Reglers 21 vermindert.

In Fig. 3 ist der Verlauf des externen Vorgabewerts 24 für die Wirkleistung P über der Zeit t dargestellt. In dem Zeitraum T₀ bis T₁ ändert sich der externe Vorgabewert 24 lediglich einmal nach unten. Vor dem Zeitpunkt T₀ gab es eine Änderung nach oben, die jedoch außerhalb des Zeitraums T₀ bis T₁ liegt und deswegen nicht mehr berücksichtigt wird. In Fig. 3 gibt es also eine einzelne Änderung des externen Vorgabewerts 24 jedoch keine Richtungsänderung. Ohne Richtungsänderung in dem Zeitraum T₀ bis T₁ wird die Gewichtung des externen Vorgabewerts 24 gegenüber dem Stellwert 25 des Reglers 21 nicht vermindert. Der externe Vorgabewert 24 überlagert den Stellwert 25 mit einer hohen Gewichtung (Ausgangsgewichtung), sodass der Stellwert 25 nur einen geringen Einfluss auf die Stellgrößen hat.

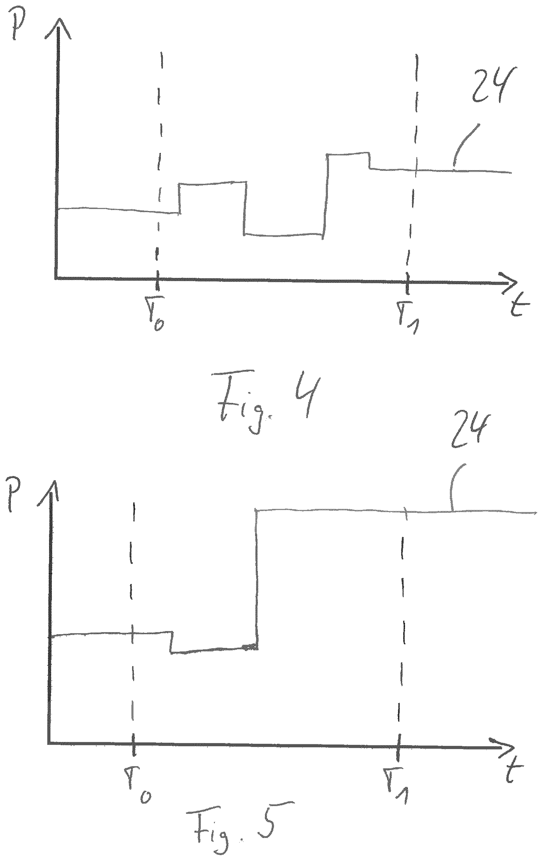

Bei der in Fig. 4 gezeigten Vorgabewertfolge kommt es zu Beginn des Zeitraums T₀ bis T₁ zu einer Änderung des externen Vorgabewerts 24 nach oben, dann zu einer Änderung nach unten, dann zu einer weiteren Änderung nach oben und einer weiteren Änderung nach unten. Es gibt also innerhalb des Zeitraums T₀ bis T₁ insgesamt drei Richtungsänderungen, die mit der Auswerteeinheit 23 festgestellt werden. Damit ist die Bedingung für eine Verminderung der Gewichtung des externen Vorgabewerts 24 gegenüber dem Stellwert 25 eingetreten. Das Gewichtungsmodul 22 vermindert die Gewichtung bezogen auf die Ausgangsgewichtung um 50 %.

Die in Fig. 5 gezeigte Vorgabewertfolge umfasst lediglich eine einzelne Richtungsänderung innerhalb des Zeitraums T₀ bis T₁. Die einzelne Richtungsänderung für sich genommen ist kein Anlass, die Gewichtung des externen Vorgabewerts 24 relativ zu dem Stellwert 25 des Reglers 21 zu vermindern. Allerdings ist der Sprung des externen Vorgabewerts 24 nach oben größer als ein vorgegebener Schwellwert, weswegen bereits die einzelne Richtungsänderung ausreichen kann, um die Stabilität des Betriebszustands der Windenergieanlage zu beeinträchtigen. Das Gewichtungsmodul 22 vermindert deswegen die Gewichtung des externen Vorgabewerts 24 auf 50 %. Die verminderte Gewichtung wird direkt angewendet auf den letzten Sprung des externen Vorgabewerts 24, der die Verminderung ausgelöst hat.

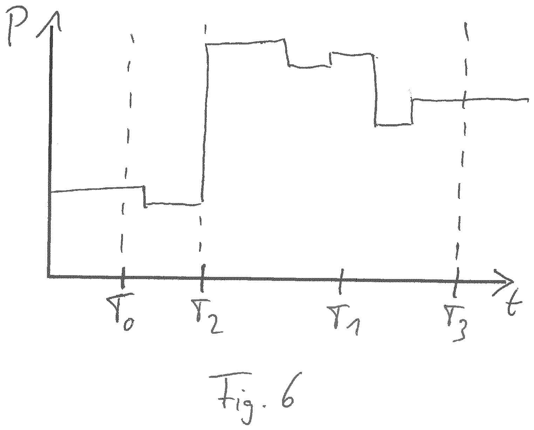

In dem Ausführungsbeispiel gemäß Fig. 6 kommt es zum Zeitpunkt T₂, der innerhalb des Zeitraums T₀ bis T₁ liegt, erneut zu einem großen Sprung nach oben, sodass das Gewichtungsmodul 22 die Gewichtung des externen Vorgabewerts 24 auf 50 % reduziert. Zum Zeitpunkt T₂ wird eine Anschlusszeitspanne T₂ bis T₃ in Gang gesetzt. Innerhalb der Anschlusszeitspanne T₂ bis T₃ treten mehrere weitere Richtungsänderungen auf. Das Gewichtungsmodul 22 wird dadurch veranlasst, die Gewichtung des externen Vorgabewerts 24 weiter zu reduzieren, beispielsweise auf 0 %. Der Stellwert 25 des Reglers 21 wird dann durch den externen Vorgabewert 24 nicht beeinflusst, sondern wird unverändert zu den Stellgliedern 16, 18, 19 geleitet.

## Patentansprüche

1. Verfahren zum Steuern einer Windenergieanlage, bei dem in einem geschlossenen Regelkreis (21, 26) ein Stellwert (25) für eine Stellgröße (16, 18, 19) der Windenergieanlage ermittelt wird und bei dem die Stellgröße (16, 18, 19) gemäß einem mit einer Gewichtung versehenen externen Vorgabewert (24) eingestellt wird, wobei bei einer Vorgabewertfolge mit wenigstens einer Richtungsänderung die Gewichtung des externen Vorgabewerts (24) vermindert wird, **dadurch gekennzeichnet, dass** die Gewichtung des externen Vorgabewerts (24) vermindert wird, wenn die eine Richtungsänderung oder die Mehrzahl von Richtungsänderungen innerhalb eines vorgegebenen zeitlichen Intervalls (T₀, T₁) auftritt.

2. Verfahren nach Anspruch 1, **dadurch gekennzeichnet, dass** der externe Vorgabewert (24) dem Stellwert (25) überlagert wird.

3. Verfahren nach Anspruch 1 oder 2, **dadurch gekennzeichnet, dass** der externe Vorgabewert (24) dem geschlossenen Regelkreis als Sollwert zugeführt wird.

4. Verfahren nach einem der Ansprüche 1 bis 3, **dadurch gekennzeichnet, dass** die Gewichtung des externen Vorgabewerts (24) vermindert wird, wenn die Vorgabewertfolge eine Mehrzahl von Richtungsänderungen aufweist.

5. Verfahren nach einem der Ansprüche 1 bis 4, **dadurch gekennzeichnet, dass** die Gewichtung des externen Vorgabewerts (24) vermindert wird, wenn die Vorgabewertfolge eine einzelne Richtungsänderung aufweist, sofern die Differenz zwischen zwei externen Vorgabewerten (24) der Vorgabewertfolge größer ist als ein vorgegebener Schwellwert.

6. Verfahren nach Anspruch 5, **dadurch gekennzeichnet, dass** das zeitliche Intervall (T₀, T₁) ein gleitendes Intervall ist.

7. Verfahren nach einem der Ansprüche 1 bis 6, **dadurch gekennzeichnet, dass** die Gewichtung des externen Vorgabewerts (24) vermindert wird, wenn entweder eine erste Anzahl von Richtungsänderungen innerhalb einer ersten vorgegebenen Zeitspanne auftritt, oder wenn innerhalb einer zweiten vorgegebenen Zeitspanne eine zweite Anzahl von Richtungsänderungen auftritt, bei der die Differenz der externen Vorgabewerte (24) größer ist als ein vorgegebener Schwellwert.

8. Verfahren nach einem der Ansprüche 1 bis 7, **dadurch gekennzeichnet, dass** mit der ersten Verminderung der Gewichtung des externen Vorgabewerts (24) eine Anschlusszeitspanne (T₂, T₃) in Gang gesetzt wird und dass die Gewichtung des externen Vorgabewerts (24) stärker vermindert wird, wenn innerhalb der Anschlusszeitspanne (T₂, T₃) ein zweites Mal eine Bedingung für eine Verminderung der Gewichtung des externen Vorgabewerts (24) eintritt.

9. Verfahren nach Anspruch 8, **dadurch gekennzeichnet, dass** mit der ersten Verminderung die Gewichtung auf einen Wert von 30 % bis 70 % verglichen mit einer Ausgangsgewichtung gesetzt wird und dass mit der zweiten Verminderung die Gewichtung auf einen Wert zwischen 0 % und 30 % verglichen mit der Ausgangsgewichtung gesetzt wird.

10. Verfahren nach einem der Ansprüche 1 bis 9, **dadurch gekennzeichnet, dass** der externe Vorgabewert (24) sich auf die Wirkleistung und/oder die Blindleistung der Windenergieanlage bezieht.

11. Verfahren nach einem der Ansprüche 1 bis 10, **dadurch gekennzeichnet, dass** der externe Vorgabewert (24) vorgegeben wird von einem Anschlussnetz, in das die Windenergieanlage elektrische Energie einspeist, oder vorgegeben wird von einer Steuerung eines Windparks, an die Windenergieanlage angeschlossen ist, oder vorgegeben wird von einer übergeordneten Steuerungsebene der Windenergieanlage.

12. Verfahren nach einem der Ansprüche 1 bis 11, **dadurch gekennzeichnet, dass** Einstellen der Gewichtung dadurch erfolgt, dass ein Verstärkungsfaktor angepasst wird, mit dem der externe Vorgabewert (24) dem geschlossenen Regelkreis zugeführt wird.

13. Verfahren nach einem der Ansprüche 1 bis 12, **dadurch gekennzeichnet, dass** Einstellen der Gewichtung dadurch erfolgt, dass die Vorgabewertfolge geglättet oder gefiltert wird.

14. Steuerungssystem für eine Windenergieanlage, mit einem Regler (21), der in einem geschlossenen Regelkreis (21, 26) einen Stellwert (25) für eine Stellgröße (16, 18, 19) der Windenergieanlage ermittelt, und mit einem Gewichtungsmodul (22), das dazu ausgelegt ist, dem geschlossenen Regelkreis (21, 16) einen externen Vorgabewert (24) mit einer Gewichtung zuzuführen, so dass die Stellgröße (16, 18, 21) gemäß dem mit der Gewichtung versehenen externen Vorgabewert (24) eingestellt wird, **dadurch gekennzeichnet, dass** das Gewichtungsmodul (22) dazu ausgelegt ist, die Gewichtung des externen Vorgabewerts (24) in Abhängigkeit von einer Richtungsänderung in einer Vorgabewertfolge zu vermindern, wenn die eine Richtungsänderung oder die Mehrzahl von Richtungsänderungen innerhalb eines vorgegebenen zeitlichen Intervalls (T₀, T₁) auftritt..

## Claims

1. Method for controlling a wind turbine, in which a setting value (25) for a setting variable (16, 18, 19) of the wind turbine is determined in a closed control loop (21, 26), and in which the setting variable (16, 18, 19) is set according to an external preset value (24) that is provided with a weighting, wherein the weighting of the external preset value (24) is reduced in a preset value sequence with at least one change of direction, **characterized in that** the weighting of the external preset value (24) is reduced if the change of direction or the plurality of changes of direction takes place within a predefined time interval (T0, T1).

2. Method according to Claim 1, **characterized in that** the external preset value (24) is overlaid over the setting value (25).

3. Method according to Claim 1 or 2, **characterized in that** the external preset value (24) is supplied to the closed control loop as a setpoint value.

4. Method according to one of Claims 1 to 3, **characterized in that** the weighting of the external preset value (24) is reduced if the preset value sequence has a plurality of changes of direction.

5. Method according to one of Claims 1 to 4, **characterized in that** the weighting of the external preset value (24) is reduced if the preset value sequence has a single change of direction, provided that the difference between two external preset values (24) of the preset value sequence is greater than a preset threshold value.

6. Method according to Claim 5, **characterized in that** the time interval (T0, T1) is a sliding interval.

7. Method according to one of Claims 1 to 6, **characterized in that** the weighting of the external preset value (24) is reduced either if a first number of changes of direction occurs within a first preset timespan, or if a second number of changes of direction occurs within a second preset timespan, in which the difference of the external preset values (24) is greater than a preset threshold value.

8. Method according to one of Claims 1 to 7, **characterized in that** the first reduction of the weighting of the external preset value (24) initiates an additional timespan (T2, T3), and **in that** the weighting of the external preset value (24) is minimized further if a condition for reducing the weighting of the external preset value (24) arises a second time within the additional timespan (T2, T3).

9. Method according to Claim 8, **characterized in that** the first weighting reduction reduces the weighting to a value of between 30% and 70% of a starting weighting, and **in that** the second weighting reduction reduces the weighting to a value of between 0% and 30% compared to the starting weighting.

10. Method according to one of Claims 1 to 9, **characterized in that** the external preset value (24) relates to the effective power and/or the reactive power of the wind turbine.

11. Method according to one of Claims 1 to 10, **characterized in that** the external preset value (24) is preset by a connection grid into which the wind turbine feeds electrical power, or is preset by a control system of a wind farm to which the wind turbine is connected, or is preset by a superordinate control level of the wind turbine.

12. Method according to one of Claims 1 to 11, **characterized in that** the setting of the weighting is carried out by adapting a gain with which the external preset value (24) is supplied to the closed control loop.

13. Method according to one of Claims 1 to 12, **characterized in that** the setting of the weighting is carried out by smoothing or filtering the preset value sequence.

14. Control system for a wind turbine, having a controller (21) which determines, in a closed control loop (21, 26), a setting value (25) for a setting variable (16, 18, 19) of the wind turbine, and having a weighting module (22) which is configured to provide to the closed control loop (21, 16) an external preset value (24) with a weighting such that the setting variable (16, 18, 21) is set according to the external preset value (24) that is provided with the weighting, **characterized in that** the weighting module (22) is configured to reduce the weighting of the external preset value (24) in dependence on a change of direction in a preset value sequence if the one change of direction or the plurality of changes of direction occurs within a preset time interval (T0, T1).

## Revendications

1. Procédé pour commander un aérogénérateur, avec lequel une valeur de commande (25) pour une variable de commande (16, 18, 19) de l'aérogénérateur est déterminée dans un circuit de régulation (21, 26) fermé et avec lequel la variable de commande (16, 18, 19) est réglée conformément à une valeur spécifiée externe (24) pourvue d'une pondération, la pondération de la valeur spécifiée externe (24) étant réduite dans le cas d'une séquence de valeurs spécifiées ayant au moins un changement de direction, **caractérisé en ce que** la pondération de la valeur spécifiée externe (24) est réduite lorsque ledit changement de direction ou la pluralité de changements de direction se produisent à l'intérieur d'un intervalle de temps (T₀, T₁) prédéfini.

2. Procédé selon la revendication 1, **caractérisé en ce que** la valeur spécifiée externe (24) est superposée à la valeur de commande (25).

3. Procédé selon la revendication 1 ou 2, **caractérisé en ce que** la valeur spécifiée externe (24) est acheminée au circuit de régulation en tant que valeur de consigne.

4. Procédé selon l'une des revendications 1 à 3, **caractérisé en ce que** la pondération de la valeur spécifiée externe (24) est réduite lorsque la séquence de valeurs spécifiées présente une pluralité de changements de direction.

5. Procédé selon l'une des revendications 1 à 4, **caractérisé en ce que** la pondération de la valeur spécifiée externe (24) est réduite lorsque la séquence de valeurs spécifiées présente un unique changement de direction, sous réserve que la différence entre deux valeurs spécifiées externes (24) de la séquence de valeurs spécifiées soit supérieure à une valeur de seuil prédéfinie.

6. Procédé selon la revendication 5, **caractérisé en ce que** l'intervalle de temps (T₀, T₁) est un intervalle glissant.

7. Procédé selon l'une des revendications 1 à 6, **caractérisé en ce que** la pondération de la valeur spécifiée externe (24) est réduite lorsqu'un premier nombre de changements de direction se produit à l'intérieur d'une première période prédéfinie ou lorsqu'un deuxième nombre de changements de direction se produit à l'intérieur d'une deuxième période prédéfinie, avec lequel la différence entre les valeurs spécifiées externes (24) est supérieure à une valeur de seuil prédéfinie.

8. Procédé selon l'une des revendications 1 à 7, **caractérisé en ce qu'**une période de raccordement (T₂, T₃) est initiée avec la première réduction de la pondération de la valeur spécifiée externe (24), et **en ce que** la pondération de la valeur spécifiée externe (24) est plus fortement réduite si une condition pour une réduction de la pondération de la valeur spécifiée externe (24) se produit une deuxième fois dans la période de raccordement (T₂, T₃).

9. Procédé selon la revendication 8, **caractérisé en ce qu'**avec la première réduction, la pondération est fixée à une valeur de 30 % à 70 % par rapport à une pondération initiale et **en ce qu'**avec la deuxième réduction, la pondération est fixée à une valeur entre 0 % et 30 % par rapport à la pondération initiale.

10. Procédé selon l'une des revendications 1 à 9, **caractérisé en ce que** la valeur spécifiée externe (24) se rapporte à la puissance active et/ou à la puissance réactive de l'aérogénérateur.

11. Procédé selon l'une des revendications 1 à 10, **caractérisé en ce que** la valeur spécifiée externe (24) est prédéfinie par un réseau de raccordement dans lequel l'aérogénérateur injecte de l'énergie électrique, ou est prédéfinie par une commande d'un parc éolien auquel l'aérogénérateur est raccordé, ou est prédéfinie par un niveau de commande supérieur de l'aérogénérateur.

12. Procédé selon l'une des revendications 1 à 11, **caractérisé en ce que** le réglage de la pondération est effectué en adaptant un facteur de gain avec lequel la valeur spécifiée externe (24) est acheminée au circuit de régulation fermé.

13. Procédé selon l'une des revendications 1 à 12, **caractérisé en ce que** le réglage de la pondération est effectué en lissant ou en filtrant la séquence de valeurs spécifiées.

14. Système de commande pour un aérogénérateur, comprenant un régulateur (21) qui détermine une valeur de commande (25) pour une variable de commande (16, 18, 19) de l'aérogénérateur dans un circuit de régulation (21, 26) fermé, et comprenant un module de pondération (22) qui est conçu pour acheminer une valeur spécifiée externe (24) au circuit de régulation (21, 16) fermé de sorte que la variable de commande (16, 18, 21) soit réglée conformément à la valeur spécifiée externe (24) pourvue de la pondération, **caractérisé en ce que** le module de pondération (22) est conçu pour réduire la pondération de la valeur spécifiée externe (24) en fonction d'un changement de direction dans une séquence de valeurs spécifiées lorsque ledit changement de direction ou la pluralité de changements de direction se produisent à l'intérieur d'un intervalle de temps (T₀, T₁) prédéfini.
